(19) **Europäisches Patentamt / European Patent Office / Office européen des brevets**

(11) **EP 4 472 297 A1**

(12) **EUROPEAN PATENT APPLICATION**
published in accordance with Art. 153(4) EPC

(43) Date of publication:
04.12.2024 Bulletin 2024/49

(21) Application number: 23747258.4

(22) Date of filing: 19.01.2023

(51) International Patent Classification (IPC):
H04W 52/14 (2009.01)      H04W 52/36 (2009.01)
H04W 52/32 (2009.01)      H04W 52/42 (2009.01)
H04W 72/23 (2023.01)      H04B 7/0456 (2017.01)
H04B 7/0426 (2017.01)      H04B 7/0404 (2017.01)

(52) Cooperative Patent Classification (CPC):
H04B 7/0404; H04B 7/0426; H04B 7/0456;
H04W 52/14; H04W 52/32; H04W 52/36;
H04W 52/42; H04W 72/23

(86) International application number:
PCT/KR2023/000950

(87) International publication number:
WO 2023/146216 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 KR 20220013085

(71) Applicant: LG Electronics Inc.
Yeongdeungpo-gu
Seoul 07336 (KR)

(72) Inventors:
• GO, Seongwon
  Seoul 06772 (KR)
• KIM, Hyungtae
  Seoul 06772 (KR)
• KANG, Jiwon
  Seoul 06772 (KR)
• PARK, Haewook
  Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND DEVICE FOR PERFORMING UPLINK TRANSMISSION AND RECEPTION IN WIRELESS COMMUNICATION SYSTEM**

(57) Disclosed are a method and device for performing uplink transmission and reception in a wireless communication system. The method for performing uplink transmission and reception in a wireless communication system according to an embodiment disclosed herein may comprise the steps of: transmitting, to a base station, first capability information related to the maximum transmission power for each of a plurality of spatial parameters supported by a terminal; receiving, from the base station, first information related to a plurality of power control parameters respectively associated with the plurality of spatial parameters and based on the first capability information; receiving, from the base station, second information indicative of one of simultaneous uplink transmission or repeated uplink transmissions based on the plurality of spatial parameters; and performing the simultaneous uplink transmission or repeated uplink transmissions based on the plurality of spatial parameters on the basis of the first information and the second information.

EP 4 472 297 A1

FIG.9

| |
|---|
| TRANSMITTING FIRST CAPABILITY INFORMATION RELATED TO THE MAXIMUM TRANSMISSION POWER FOR EACH OF THE PLURALITY OF SPATIAL PARAMETERS SUPPORTED BY THE UE TO THE BASE STATION |

~ S910

| |
|---|
| RECEIVING FIRST INFORMATION RELATED TO A PLURALITY OF POWER CONTROL PARAMETERS ASSOCIATED WITH EACH OF A PLURALITY OF SPATIAL PARAMETERS BASED ON THE FIRST CAPABILITY INFORMATION FROM THE BASE STATION |

~ S920

| |
|---|
| RECEIVING SECOND INFORMATION FROM THE BASE STATION INDICATING ONE OF SIMULTANEOUS UPLINK TRANSMISSION OR REPEATED UPLINK TRANSMISSION BASED ON A PLURALITY OF SPATIAL PARAMETERS |

~ S930

| |
|---|
| PERFORMING SIMULTANEOUS UPLINK TRANSMISSION OR REPEATED UPLINK TRANSMISSION BASED ON A PLURALITY OF SPATIAL PARAMETERS BASED ON THE FIRST INFORMATION AND THE SECOND INFORMATION |

~ S940

## Description

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

Additionally, an additional technical problem of the present disclosure is to provide a method and device for transmitting and receiving capability information related to the maximum transmission power for each of a plurality of panels.

Additionally, an additional technical problem of the present disclosure is to provide a method and device for transmitting and receiving information indicating a Simultaneous transmission across Multiple Panels (STxMP) transmission operation or a repetitive transmission operation.

The technical objects to be achieved by the present disclosure are not limited to the above-described technical objects, and other technical objects which are not described herein will be clearly understood by those skilled in the pertinent art from the following description.

[Technical Solution]

According to an embodiment of the present disclosure, a method for of performing uplink transmission by a user equipment (UE) in a wireless communication system may include transmitting, to a base station, first capability information related to maximum transmission power for each of a plurality of spatial parameters supported by the UE; receiving, from the base station, first information related to a plurality of power control parameters associated with each of the plurality of spatial parameters based on the first capability information; receiving, from the base station, second information indicating one of the plurality of spatial parameters-based simultaneous uplink transmission or uplink repeated transmission; and based on the first information and the second information, performing the plurality of spatial parameters-based simultaneous uplink transmission or the uplink repeated transmission.

According to another embodiment of the present disclosure, a method of performing uplink reception by a base station in a wireless communication system may include receiving, from a user equipment (UE), first capability information related to maximum transmission power for each of a plurality of spatial parameters supported by the UE; transmitting, from the UE, first information related to a plurality of power control parameters associated with each of the plurality of spatial parameters based on the first capability information; transmitting, to the UE, second information indicating one of the plurality of spatial parameters-based simultaneous uplink transmission or uplink repeated transmission; and based on the first information and the second information, performing the plurality of spatial parameters-based simultaneous uplink reception or the uplink repeated reception.

[Technical Effects]

According to an embodiment of the present disclosure, a method and device for performing uplink transmission and reception in a wireless communication system may be provided.

Additionally, according to an embodiment of the present disclosure, a method and device for transmitting and receiving capability information related to the maximum transmission power for each of a plurality of panels may be provided.

Additionally, according to an embodiment of the present disclosure, a method and device for transmitting and receiving information indicating a Simultaneous transmission across Multiple Panels (STxMP) transmission operation or a repetitive transmission operation may be provided.

In addition, according to an embodiment of the present disclosure, power parameters can be efficiently set for each panel based on the maximum transmission power for each panel, and repetitive transmission or simultaneous transmission can be dynamically controlled.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method in which a terminal and a base station perform uplink transmission and reception in a wireless communication system to which the present disclosure may be applied.

FIG. 8 illustrates a procedure for controlling uplink transmission power to which the present disclosure may be applied.

FIG. 9 is a diagram for describing an uplink transmission operation of a UE in a wireless communication system to which the present disclosure may be applied.

FIG. 10 is a diagram for describing an uplink reception operation of a base station in a wireless communication system to which the present disclosure may be applied.

FIG. 11 is a diagram for describing the signaling procedure of the network side and the UE according to an embodiment of the present disclosure.

FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc.

between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator

- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

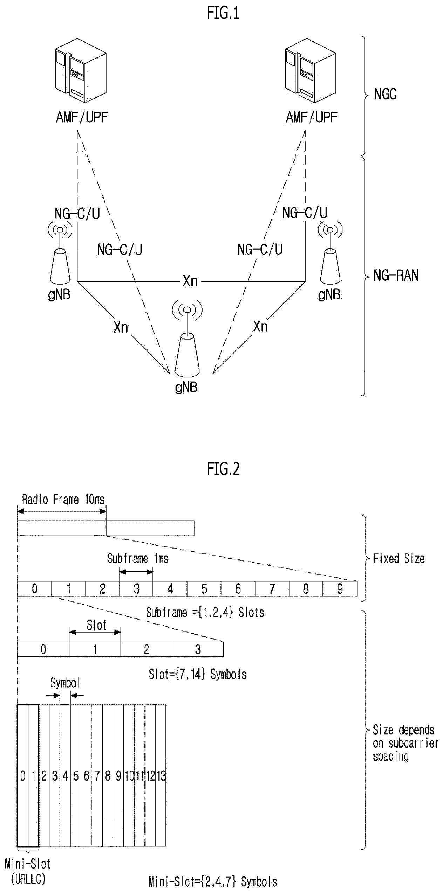

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$.

Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

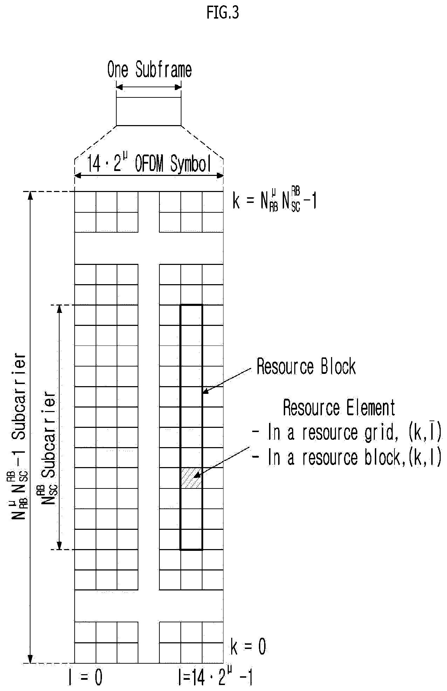

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max,\mu}$ represents a maximum transmission bandwidth, which may be different between an uplink and a downlink as well as between numerologies.

In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l}^{(p,\mu)}$. When there is no risk of confusion or when a specific antenna port or numerology is not specified, indexes p and μ may be dropped, whereupon a complex value may be $a_{k,l}^{(p)}$ or $a_{k,l}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

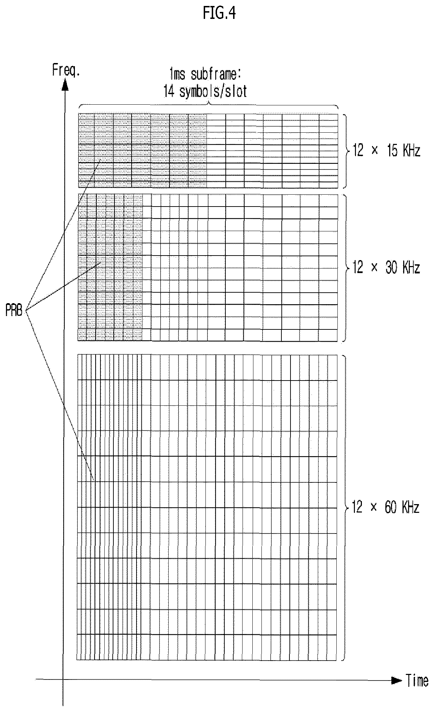

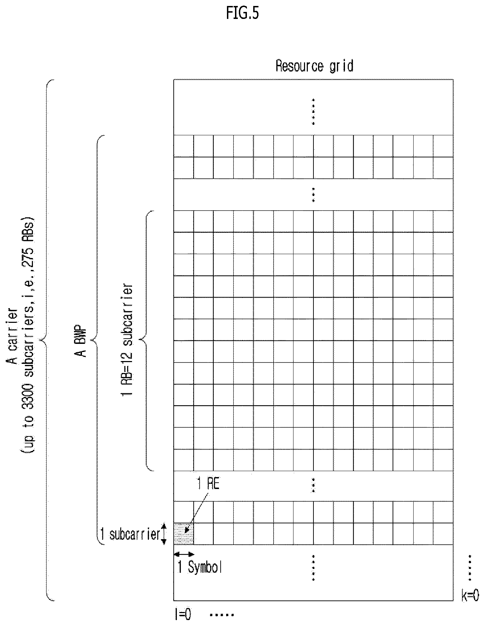

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot.

In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

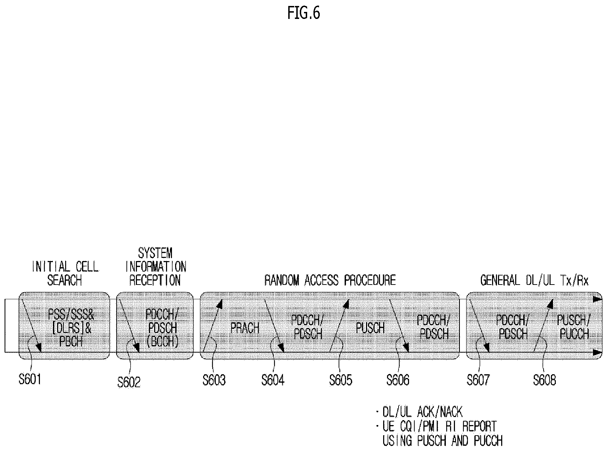

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Uplink transmission and reception operation

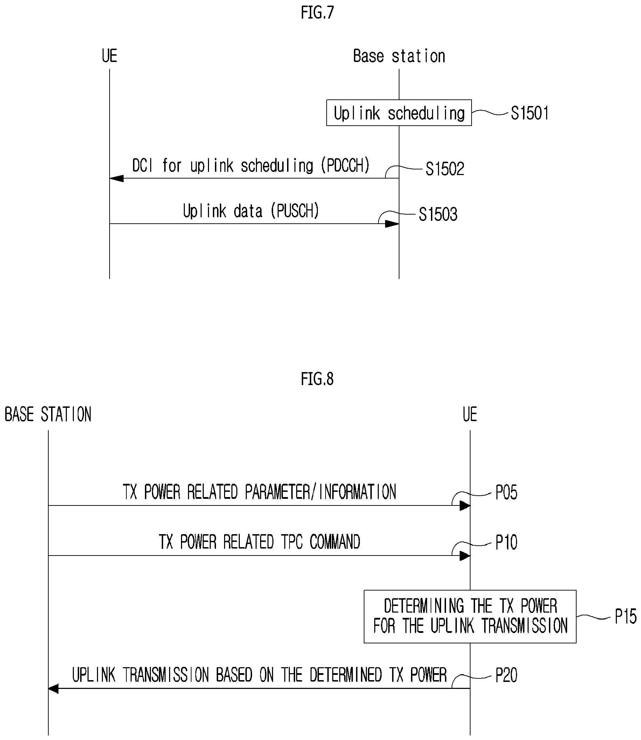

FIG. 7 is a diagram illustrating an uplink transmission and reception operation in a wireless communication system to which the present disclosure can be applied.

Referring to FIG. 7, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

As an example, the SRS resources set in the SRS resource set associated with the higher layer parameter 'usage' may be indicated by the SRS resource indicator field included in the DCI. Additionally, 'spatialRelationInfo' may be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission:
codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

Power control of uplink data channels

Hereinafter, a method for controlling power when the terminal performs PUSCH transmission will be described. The method described later may be expanded and applied to other uplink data channels supported in wireless communication systems.

In the case of PUSCH transmission in the active UL BWP of the carrier (f) of the serving cell (c), the UE may calculate the linear power value of the transmission power determined by Equation 3 below. Thereafter, the UE may control the transmission power by considering the calculated linear power value in consideration of the number of antenna ports and/or the number of SRS ports.

【Equation 3】

$$P_{\text{PUSCH},b,f,c}(i, j, q_d, l)$$
$$= min \begin{cases} P_{\text{CMAX},f,c}(i), \\ P_{\text{O\_PUSCH},b,f,c}(j) + 10\, log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

Specifically, when the UE performs PUSCH transmission on the activated UL BWP (b) of the carrier (f) of the serving cell (c) using the parameter set configuration based on index j and the PUSCH power control adjustment state based on index l, the UE may determine the PUSCH transmission power $P_{\text{PUSCH},b,f,c}(i, j, q_d, l)$ (dBm) at the PUSCH transmission opportunity (i) based on Equation 3.

In Equation 3, Index j represents an index for an open-loop power control parameter (e.g., Po, alpha (a), etc.), and up to 32 parameter sets may be configured per cell. Index q_d represents the index of the DL RS resource for PathLoss (PL) measurement (e.g., $PL_{b,f,c}(q_d)$), and up to 4 measurements may be configured per cell. Index l represents the index for the closed-loop power control process, and up to two processes may be configured per cell.

Specifically, Po (e.g., $P_{\text{O\_PUSCH},b,f,c}(j)$) is a parameter broadcast as part of system information and may indicate the target received power on the receiving side. The corresponding Po value may be configured considering the UE's throughput, cell capacity, noise and/or interference, etc.

Additionally, alpha (e.g., $\alpha_{b,f,c}(j)$) may indicate the rate at which compensation for path loss is performed. Alpha may be configured to a value from 0 to 1, and depending on the set value, full pathloss compensation or fractional pathloss compensation may be performed. Here, the alpha value may be configured in consideration of interference between terminals and/or data speed. Additionally, $P_{\text{CMAX},f,c}(i)$ may represent the configured UE transmit power.

For example, the configured UE transmission power may be interpreted as a predefined "configured maximum UE output power". Additionally, $M_{\text{RB},b,f,c}^{\text{PUSCH}}(i)$ may represent the bandwidth of PUSCH resource allocation expressed as the number of resource blocks (RB) for PUSCH transmission opportunities based on subcarrier spacing ($\mu$). In addition, $f_{b,f,c}(i, l)$ related to the PUSCH power control adjustment status may be configured or indicated based on the TPC command field of DCI (e.g., DCI format 0_0, DCI format 0_1, DCI format 2_2, DCI format 2_3, etc.).

Here, a specific RRC parameter (e.g., 'SRI-PUSCHPowerControl-Mapping', etc.) may indicate a linkage between the SRI field of DCI and the above-mentioned indices j, q_d, and l. That is, the above-mentioned indices j, l, q_d, etc. may be associated with a beam, panel, and/or spatial domain transmission filter, etc. based on specific information. Through this, PUSCH transmission power control may be performed in beam, panel, and/or spatial domain transmission filter units.

The parameters and/or information for PUSCH power control described above may be configured individually (i.e., independently) for each BWP. In this case, the corresponding parameters and/or information may be configured or indicated through higher layer signaling (e.g., RRC signaling, MAC-CE, etc.) and/or DCI. For example, parameters and/or information for PUSCH power control may be transmitted through RRC signaling 'PUSCH-ConfigCommon', 'PUSCH-PowerControl', etc. and 'PUSCH-ConfigCommon' and 'PUSCH-PowerControl' may be configured as shown in Table 6 below.

【Table 6】

```
    PUSCH-ConfigCommon ::=                      SEQUENCE {
          groupHoppingEnabledTransformPrecoding    ENUMERATED {enabled}
          pusch-TimeDomainAllocationList           PUSCH-
    TimeDomainResourceAllocationList
          msg3-DeltaPreamble                         INTEGER (-1..6)
          p0-NominalWithGrant                        INTEGER (-202..24)
          ...
    }



    PUSCH-PowerControl ::=                  SEQUENCE {
          tpc-Accumulation                       ENUMERATED { disabled }
          msg3-Alpha                              Alpha
          p0-NominalWithoutGrant                  INTEGER (-202..24)
          p0-AlphaSets                            SEQUENCE (SIZE (1..maxNrofP0-
    PUSCH-AlphaSets)) OF P0-PUSCH-AlphaSet
          pathlossReferenceRSToAddModList         SEQUENCE (SIZE
    (1..maxNrofPUSCH-PathlossReferenceRSs)) OF PUSCH-PathlossReferenceRS
          pathlossReferenceRSToReleaseList        SEQUENCE (SIZE
    (1..maxNrofPUSCH-PathlossReferenceRSs)) OF PUSCH-PathlossReferenceRS-Id
          twoPUSCH-PC-AdjustmentStates            ENUMERATED {twoStates}
          deltaMCS                                ENUMERATED {enabled}
          sri-PUSCH-MappingToAddModList           SEQUENCE (SIZE (1..maxNrofSRI-
    PUSCH-Mappings)) OF SRI-PUSCH-PowerControl
```

```
          sri-PUSCH-MappingToReleaseList          SEQUENCE (SIZE (1..maxNrofSRI-
    PUSCH-Mappings)) OF SRI-PUSCH-PowerControlId
    }
```

Through the method described above, the UE may determine or calculate the PUSCH transmission power and transmit the PUSCH using the determined or calculated PUSCH transmission power. Power control of uplink control channel

Hereinafter, a method for controlling power when the UE performs PUCCH transmission will be described. The method described later may be expanded and applied to other uplink control channels supported in wireless communication systems.

Specifically, when the UE performs PUCCH transmission in the activated UL BWP (b) of the carrier (f) of the primary cell (or secondary cell) (c) using the PUCCH power control adjustment state based on index l, the UE may determine the PUCCH transmission power (dBm) at the PUCCH transmission opportunity (i) based on Equation 4 below.

【Equation 4】

$$P_{\text{PUCCH},b,f,c}(i,q_u,q_d,l)$$
$$= min \begin{cases} P_{\text{CMAX},f,c}(i), \\ P_{\text{O\_PUCCH},b,f,c}(q_u) + 10\, log_{10}(\, 2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases}$$

In equation 4, q_u represents an index for an open-loop power control parameter (e.g., Po, etc.), and up to 8 parameter values may be configured per cell. Index q_d represents the index of the DL RS resource for path loss (PL) measurement (e.g., $PL_{b,f,c}(q_d)$), and up to 4 measurements may be configured per cell. Index l represents the index for the closed-loop power control process, and up to two processes may be configured per cell.

Specifically, Po (e.g., $P_{\text{O\_PUCCH},b,f,c}(q_u)$) is a parameter broadcast as part of system information and may indicate the target received power on the receiving side. The corresponding Po value can be set considering the UE's throughput, cell capacity, noise and/or interference, etc.

Additionally, $P_{\text{CMAX},f,c}(i)$ may represent the configured UE transmission power. For example, the configured UE transmission power may be interpreted as a predefined "configured maximum UE output power".

Additionally, $M_{\text{RB},b,f,c}^{\text{PUCCH}}(i)$ may represent the bandwidth of PUCCH resource allocation expressed as the number of resource blocks (RBs) for PUCCH transmission opportunities based on the subcarrier spacing ($\mu$). Additionally, a delta function (e.g., $\Delta_{\text{F\_PUCCH}}(F)$, $\Delta_{\text{TF},b,f,c}(i)$) may be configured considering the PUCCH format (e.g., PUCCH formats 0, 1, 2, 3, 4, etc.). In addition, $g_{b,f,c}(i,l)$ related to the PUCCH power control adjustment state may be configured or indicated based on the TPC command field of the DCI (e.g., DCI format 1_0, DCI format 1_1, DCI format 2_2, etc.) received or detected by the UE.

In this case, specific RRC parameters (e.g., 'PUCCH-SpatialRelationInfo', etc.) and/or specific MAC-CE commands (e.g., PUCCH spatial relationship Activation/Deactivation, etc.) may be used to activate or deactivate the connection relationship between PUCCH resources and the above-mentioned indices q_u, q_d, and l.

For example, PUCCH spatial relation Activation/Deactivation command in MAC-CE may activate or deactivate the connection relationship between PUCCH resources and the above-mentioned indices q_u, q_d, and l based on the RRC parameter 'PUCCH-SpatialRelationInfo'. That is, the above-mentioned indices q_u, q_d, l, etc. may be associated with beams, panels, and/or spatial domain transmission filters, etc. based on specific information. Through this, PUCCH transmission power control may be performed in beam, panel, and/or spatial domain transmission filter units.

The parameters and/or information for PUCCH power control described above may be configured individually (i.e., independently) for each BWP. In this case, the corresponding parameters and/or information may be configured or indicated through higher layer signaling (e.g., RRC signaling, MAC-CE, etc.) and/or DCI. For example, parameters and/or information for PUCCH power control may be transmitted through RRC signaling 'PUCCH-ConfigCommon', 'PUCCH-PowerControl', etc., and 'PUCCH-CopnfigCommon' and 'PUCCH-PowerControl' may be configured as shown in Table 7 below.

【Table 7】

```
PUCCH-ConfigCommon ::=              SEQUENCE {
    pucch-ResourceCommon                INTEGER (0..15)
    pucch-GroupHopping                  ENUMERATED { neither, enable,
disable },
    hoppingId                       INTEGER (0..1023)
    p0-nominal                      INTEGER (-202..24)

    ...
}


PUCCH-PowerControl ::=              SEQUENCE {
    deltaF-PUCCH-f0                     INTEGER (-16..15)
    deltaF-PUCCH-f1                     INTEGER (-16..15)
    deltaF-PUCCH-f2                     INTEGER (-16..15)
    deltaF-PUCCH-f3                     INTEGER (-16..15)
    deltaF-PUCCH-f4                     INTEGER (-16..15)
```

```
        p0-Set                          SEQUENCE (SIZE (1..maxNrofPUCCH-
P0-PerSet)) OF P0-PUCCH
        pathlossReferenceRSs            SEQUENCE (SIZE (1..maxNrofPUCCH-
PathlossReferenceRSs)) OF PUCCH-PathlossReferenceRS
        twoPUCCH-PC-AdjustmentStates    ENUMERATED {twoStates}
        ...
    }


    P0-PUCCH ::=                        SEQUENCE {
        p0-PUCCH-Id                         P0-PUCCH-Id,
        p0-PUCCH-Value                      INTEGER (-16..15)
    }


    P0-PUCCH-Id ::=                     INTEGER (1..8)


    PUCCH-PathlossReferenceRS ::=           SEQUENCE {
        pucch-PathlossReferenceRS-Id            PUCCH-PathlossReferenceRS-
Id,
        referenceSignal                         CHOICE {
            ssb-Index                               SSB-Index,
            csi-RS-Index                            NZP-CSI-RS-ResourceId
        }
}
```

Through the method described above, the UE may determine or calculate the PUCCH transmission power and transmit the PUCCH using the determined or calculated PUCCH transmission power.

Priority for transmit power control

A method for controlling the transmission power of a UE considering the case of single cell operation in the situation of carrier aggregation or single cell operation in the situation of multiple UL carriers (e.g., two UL carriers) is described.

Here, if the total UE transmit power of the UE for uplink transmissions (e.g., PUSCH, PUCCH, SRS, and/or PRACH transmissions, etc.) in each transmission occasion (TO) (i) exceeds the linear value (e.g., $\hat{P}_{CMAX}(i)$) of the configured UE transmit power, the UE may be configured to allocate power to the uplink transmissions according to priority order.

For example, the configured UE transmission power may mean a predefined 'configured maximum UE output power' (e.g., $P_{CMAX}(i)$).

Here, priorities for transmission power control may be configured or defined in the following order.

- PRACH transmission in PCell (Primary Cell)
- PUCCH for HARQ-ACK information and/or SR (Scheduling Request), or PUSCH for HARQ-ACK information
- PUCCH or PUSCH for CSI
- PUSCH not for HARQ-ACK information or CSI
- SRS transmission (however, aperiodic SRS may have higher priority than semi-periodic SRS and/or periodic SRS) or PRACH transmission in a serving cell other than a Pcell

Through power allocation based on priority order as described above, the UE may control the total transmission power in each symbol of the transmission occasion (i) to be less than or equal to the linear value of the configured transmission power of the UE. As an example, the UE may be configured to scale and/or drop power for uplink transmission with low priority. In this case, specific details about scaling and/or drop may be configured or defined to follow the UE implementation.

Additionally, as a specific example, in the case of transmissions having the same priority in carrier aggregation, the UE may consider transmission in the Pcell as a higher priority than transmission in the Scell. And/or, in the case of transmissions with the same priority on multiple UL carriers (e.g., two UL carriers), the UE may consider the carrier on which PUCCH transmission is configured as high priority. Additionally, if PUCCH transmission is not configured on any carrier, the UE may consider transmission on a non-supplementary UL carrier as high priority.

Transmission power control procedure

Figure 8 shows a procedure for controlling uplink transmission power, according to an embodiment of the present disclosure.

First, the UE may receive parameters and/or information related to transmission power (Tx power) from the base station (P05). In this case, the UE may receive the corresponding parameters and/or information through higher layer signaling (e.g., RRC signaling, MAC-CE, etc.).

For example, the UE may receive parameters (e.g., Tables 6 and 7, etc.) for controlling power of uplink transmission (e.g., PUSCH transmission, PUCCH transmission, SRS transmission, and/or PRACH transmission, etc.).

Afterwards, the UE may receive a TPC command related to transmission power from the base station (P10). In this case, the UE may receive the corresponding TPC command through DCI, etc. For example, in relation to PUSCH transmission, PUCCH transmission and/or SRS transmission, the UE may receive information about the TPC command (to be used to determine the power control adjustment status) through the TPC command field in a predefined DCI format.

However, in the case of PRACH transmission, this step may be omitted.

Thereafter, the UE may determine (or calculate) the transmission power for uplink transmission based on the parameters, information, and/or TPC command received from the base station (P15). For example, the UE may determine PUSCH transmission power, PUCCH transmission power, SRS transmission power, and/or PRACH transmission power based on the received parameters, information, and/or TPC command.

Additionally or alternatively, when two or more uplink channels and/or signals need to be transmitted overlapping, such as in situations such as carrier merging, the UE may determine the transmission power for uplink transmission by considering the above-described priority order, etc.

Thereafter, the UE may transmit one or more uplink channels and/or signals to the base station based on the determined (or calculated) transmission power (P20).

M(multi)-TRP related operation

M-TRP transmission method in which M TRPs transmit data to one UE may be largely divided into M-TRP eMBB transmission, which is a method to increase the transmission rate, and M-TRP URLLC transmission, which is a method to increase the reception success rate and reduce latency.

The DL M-TRP URLLC transmission method means that M-TRP transmits the same data/DCI using different layer/time/frequency resources. For example, TRP 1 may transmit the same data/DCI on resource 1 and TRP 2 may transmit the same data/DCI on resource 2.

The UE with the DL M-TRP URLLC transmission method may receive the same data/DCI using different layers/time/frequency resources. Here, the base station may indicate which QCL RS/type (i.e., DL TCI state) should be used in layers/time/frequency resources for the UE receives the same data/DCI.

For example, when the same data/DCI is received on resource 1 and resource 2, the base station may indicate the DL TCI state used in resource 1 and the DL TCI state used in resource 2 to the UE. Since the UE receives the same data/DCI through Resource 1 and Resource 2, high reliability can be achieved. The DL M-TRP URLLC transmission method may be applied to PDSCH or/and PDCCH.

The UL M-TRP URLLC transmission method means that M-TRP receives the same data/UCI from one UE using different layer/time/frequency resources. For example, after TRP 1 receives the same data/UCI from the UE on resource 1, and TRP 2 receives the same data/UCI from the UE on resource 2, the received data/UCI may be shared through a backhaul link between TRPs.

A UE configured with the UL M-TRP URLLC transmission method may transmit the same data/UCI using different layer/time/frequency resources. Here, the base station may indicate the UE which Tx beam and which Tx power (i.e., UL TCI state) should be used in the layer/time/frequency resource transmitting the same data/UCI. For example, when the same data/UCI is transmitted on resource 1 and resource 2, the base station may indicate the UL TCI status used in resource 1 and the UL TCI state used in resource 2 to the UE. This UL M-TRP URLLC transmission method may be applied to PUSCH or/and PUCCH.

From a DCI transmission perspective, the M-TRP transmission method may be divided into i) M-DCI-based M-TRP transmission, in which each TRP transmits a different DCI, and ii) S-DCI-based M-TRP transmission method, in which one TRP transmits DCI. For example, in the case of S-DCI-based M-TRP transmission method, since all scheduling information for transmitted data must be transmitted through one DCI, it may be applied in an ideal backhaul environment where dynamic cooperation between two TRPs is possible.

In a wireless communication system, M-TRP PDCCH repetitive transmission, MTRP PDCCH/PDSCH SFN transmission, S-DCI-based M-TRP PUSCH repetitive transmission, single PUCCH resource-based M-TRP PUCCH repetitive transmission, etc. may be supported. These transmission techniques are all intended to improve the URLLC target to increase reliability, and the same content (i.e., DCI, UL TB, or UCI, etc.) may be transmitted repeatedly.

For M-TRP PDCCH repeated transmission, specific data may be TDM or FDM and transmitted repeatedly. In the case of M-TRP PDCCH/PDSCH SFN transmission, specific data may be transmitted repeatedly using the same time/frequency/layer resources. In the case of S-DCI-based M-TRP PUSCH repeated transmission, specific data may be TDM and repeatedly transmitted. In the case of MTRP PUCCH repeated transmission based on a single PUCCH resource, feature data may be TDM and repeatedly transmitted.

S-DCI based M-TRP PDCCH repeated transmission

For M-TRP PDCCH repeated transmission, a plurality of CORESETs with different TCI states (i.e., different QCL RS) may be configured for the UE and Multiple SS (search space) sets may be configured for each corresponding CORESET. The base station indicates/configures to the UE that the SS set connected to each CORESET is linked for repeated transmission, so that the UE may know that the PDCCH candidates of the corresponding SS set are repeatedly transmitted.

For example, CORESET 0 and 1 are configured for the UE, SS sets 0 and 1 are connected to CORESET 0 and 1, respectively, and SS sets 0 and 1 may be linked to each other. The UE may know that the same DCI has been transmitted repeatedly through the PDCCH candidates of SS Set 0 and SS Set 1, respectively, and through a specific rule, the UE may know that a specific PDCCH candidate in SS set 0 and SS set 1 is a pair configured to repeatedly transmit the same DCI.

Here, the two PDCCH candidates may be referred to as linked PDCCH candidates, and the UE may successfully decode the corresponding DCI by correctly receiving at least one of the two PDCCH candidates. When receiving the PDCCH candidate of SS set 0, the UE may use the QCL RS (i.e., DL beam) in the TCI state of COERSET 0 connected to SS set 0. And, when receiving the PDCCH candidate of SS set 1, the UE may receive the connected PDCCH candidate through different beams by using the QCL RS in the TCI state of COERSET 1 connected to SS set 1.

S-DCI based MTRP PUSCH repeated transmission

The base station may configure two SRS sets for the UE for S-DCI-based M-TRP PUSCH transmission. Each of the two SRS sets may be used to indicate UL Tx port and UL beam/QCL information toward TRP 1 and TRP 2, respectively.

Additionally, the base station may indicate SRS resources for each SRS set through two SRI fields included in one DCI, and may indicate up to two PC parameter sets. For example, the first SRI field may indicate the SRS resource and PC parameter set defined in SRS set 0, and the second SRI field may indicate the SRS resource and PC parameter set defined in SRS set 1.

The UE may receive indications about the UL Tx port, PC parameter set, and UL beam/QCL information toward TRP 1 through the first SRI field, and through this, PUSCH transmission may be performed in the TO corresponding to SRS resource set 0. In addition, the UE may receive instructions for the UL Tx port, PC parameter set, and UL beam/QCL information toward TRP 2 through the second SRI field. Through this, the UE may perform PUSCH transmission in the TO corresponding to SRS resource set 1.

M-TRP PUCCH repeated transmission based on single PUCCH resource

For M-TRP PUCCH transmission based on a single PUCCH resource, the base station may configure a single PUCCH resource with two spatial relationship information activated/configured for the UE. Here, in case of FR 1, the base station may activate/configured two PC parameter sets for the UE.

When the UE transmits UL UCI based on configured PUCCH resources, each spatial relation information may be used to indicate spatial relation information toward each of TRP 1 and TRP 2.

For example, the UE may be indicated to Tx beam/PC parameters toward TRP 1 through the value indicated in the first spatial relation information, and may use the information to perform PUCCH transmission in the TO corresponding to TRP 1. Likewise, the UE may be indicated on the Tx beam/PC parameters toward TRP 2 through the value indicated in the second spatial relation information, and may use the information to perform PUCCH transmission in the TO corresponding to TRP 2.

PC information and spatial relation RS information corresponding to two TRPs may be configured through two spatial relation information, and the UE may transmit PUCCH using the first spatial relation information in TO 1, and transmit the same UCI (i.e., CSI, ACK/NAK, SR) through PUCCH using the second spatial relation information in TO 2.

In describing the present disclosure, when receiving data/DCI/UCI using specific frequency/time/space resources, from DL perspective, using(/mapping) a specific TCI state may mean estimating a channel from DMRS using the QCL type and QCL RS indicated by the corresponding DL TCI state in the corresponding frequency/Time/Space Resources, and receiving/demodulating data/DCI through the estimated channel. From a UL perspective, using (/mapping) a specific TCI state may mean transmitting/modulating DMRS and data/UCI using the Tx beam and/or Tx power indicated by the corresponding UL TCI state in the corresponding frequency/time/space resource.

The UL TCI state may include Tx beam or Tx power information of the UE, and instead of the TCI state, spatial relation information, etc. may be configured for the UE through other parameters. UL TCI state may be indicated directly through UL grant DCI/DL grant DCI. As another example, the UL TCI state may mean spatial relation information of SRS resources indicated through the SRI field of the UL grant DCI. Additionally or alternatively, the UL TCI state may refer to the OL Tx power control parameter linked to the value indicated through the SRI field of the UL grant DCI.

For convenience of description of the present disclosure, although cooperative transmission/reception between 2 TRPs is assumed, the present disclosure may be expanded and applied in a multi-TRP environment of 3 or more and may also be expanded and applied in a multi-panel environment. Different TRPs may be recognized by the UE as different TCI states, and the UE receiving/transmitting data/DCI/UCI using TCI state 1 may mean receiving/transmitting data/DCI/UCI from/to TRP 1.

And, when multiple channels are TDM, TO may mean each channel transmitted at different times. When multiple channels are FDM, TO may mean each channel transmitted on a different frequency/RB. When multiple channels are SDM, TO may mean each channel transmitted to a different layer/beam/DMRS port. One TCI state may be mapped to each TO. When transmitting the same channel repeatedly, the transmitting end may transmit DCI/data/UCI from one TO, and the receiving end may increase the reception success rate by receiving DCI/data/UCI from multiple TOs.

Beam configuring/updating/indicating method between base station and UE

To configure/indicate the reception beam for the target DL RS/channel, TCI state configuration may be utilized. For example, if the target DL RS/channel is CSI-RS, it may be possible to configure the UE reception beam by configuring the QCL type-D RS for the UE through RRC/MAC CE (via TCI state ID configuration in the TCI state pool).

As another example, if the target DL RS/channel is PDCCH, the base station may set up to 64 (or 128) TCI state IDs for a specific CORESET and configure a reception beam for the UE by indicating a specific TCI state ID through MAC CE. And, the base station may update the reception beam of the corresponding CORESET through the same MAC CE message.

Higher layer signaling (e.g., RRC and MAC CE) may be mainly used for beam indication/update operations for reception/transmission between the base station and the UE, and DCI-based beam indication operations may be supported for some channels/RS, etc.

Additionally or alternatively, the base station may use the joint DL/UL TCI state and/or the separate DL/UL TCI state to commonly indicate/update a specific beam for a plurality of specific channel/RS combinations (i.e., UE common beam update). The base station may configure the joint DL/UL TCI state and/or separate DL/UL TCI state for the terminal through higher layer signaling.

As an example, a joint DL/UL TCI state (or unified TCI state) may indicate a pair of DL TCI state and UL TCI state, DL TCI state, or UL TCI state. As an example, when receiving a TCI field indicating a pair of DL TCI state and UL TCI state from the base station, the UE may apply the corresponding DL TCI state and UL TCI state and perform uplink/downlink transmission and reception.

As another example, when the DL/UL TCI state is configured for the UE, the UE may transmit information about the number of configured TCI states that the UE may support as UE capability information to the base station. The number of DL TCI states that the UE can support (for each CC and BWP) is 64 or 128, and the number of UL TCI states may be 32 or 64.

And, CORESET may also be a target channel/RS for common beam update. Up to two CORESET pools may be configured for M-TRP transmission/reception in a specific BWP of the UE. In CORESET(s) belonging to each CORESET pool, the UE may receive DCI from a specific TRP. If a common beam operation is set/applied to a BWP with up to two CORESET pools configured (activated), a problem may occur where the CORESET beams from the two TRPs are unified.

To solve this, when the base station performs a common beam update using the joint DL/UL TCI state and/or the separate DL/UL TCI state in the BWP with CORESETPoolIndex set, the UE may update the CORESET beam.

For example, when a common beam update is performed in an activated BWP, the UE may not perform the update of all CORESET beams within the BWP even though (UE-only) CORESET is the target channel/RS for common beam update. That is, the UE may ignore the base station's DCI-based common beam update indication for all CORESETs in the BWP (excluding the common beam target channel/RS). Through these operations, the UE may maintain the two CORESET pool settings within the corresponding BWP, and may smoothly receive DCI from each TRP by referring to the QCL-type D RS (in TCI state) set/activated/corresponding to each CORESET in each CORESET pool.

Additionally or alternatively, when a common beam update is performed in the (activated) BWP, the UE may perform a common beam update only for the (first) CORESET(s) for which CORESETPoolIndex is set to 0 or for which CORESETPoolIndex is not provided, and may not perform beam update for the remaining (second) CORESET(s).

Additionally alternatively, if the number of TCI for common beam operation of the UE exceeds 1, M (i.e., the number of DL TCI states including DL source RS) or/and N (i.e., the number of UL TCI states including UL source RS) may correspond to the number of TRPs or/and the number of Rx/Tx beams/panels of the UE.

Specifically, M may correspond to the number of M TRPs (for DL transmission) or may correspond to the M number of Rx beams/panels of the UE. Additionally, N may correspond to the number of M TRPs (for UL transmission) or may correspond to the M number of Tx beams/panels of the UE. In other words, if M/N is plural, M/N common beam references may be configured/indicated for transmission and reception between a plurality of different TRPs and UEs, M/N common beam references may be configured/indicated for transmission and reception through a plurality of different beams/panels of the UE.

As an example, the base station may configure/update the target channel/RS for applying M/N (DL/UL) TCIs of the UE (in common beam operation) through RRC/MAC CE signaling.

As another example, in M/N TCIs, the first TCI may correspond to the TO group of the first PDCCH/PDSCH/CSI-RS/PUCCH/PUSCH/SRS, CORESET(s) with a CORESETPoolIndex value of 0, or/and the first PUCCH group. And, the second TCI may correspond to the TO group of the second PDCCH/PDSCH/CSI-RS/PUCCH/PUSCH/SRS, CORESET(s) with a CORESETPoolIndex value of 1, or/and the second PUCCH group. The base station may configure/indicate the UE whether M/N TCIs are applied to some target channels/RSs of a specific channel/RS.

The base station may associate/map/connect M/N TCI states (related to joint TCI) for configuring/indicating M/N common reference RSs or/and separate reference RSs (related to separate TCI) to each code point of the TCI state field of the DL/UL grant DCI. The base station may indicate the common beam for M/N transmission and reception to the UE by indicating the corresponding code point to the UE through DCI.

Additionally or alternatively, if more than one CORESET pool is set up for a specific BWP, the UE may update (with the same TCI) all CORESET(s) related to/identical to the CORESETPoolIndex of the CORESET through which the TCI update DCI is transmitted, and may not perform updates on CORESET(s) for which a different CORESETPoolIndex is configured.

Additionally, when using the PUCCH resource group when updating the DL/UL transmission/reception beam using the joint DL/UL TCI state, the UE may perform updates (with the same TCI) only for the PUCCH resource group (or all PUCCH resources included in the PUCCH resource group) associated with the corresponding TCI update DCI.

Here, the PUCCH resource group associated with the TCI update DCI may include PUCCH resource group to which the PUCCH resource corresponding to the PRI (PUCCH Resource Indicator) indicated by the relevant DCI belongs and the PUCCH resource group to which the PUCCH resource to which the (aperiodic/semi-persistent) CSI reports triggered/activated/deactivated by the corresponding DCI are sent belongs., etc.

Panel-specific UL transmission method

To support panel-specific UL transmission, operations for UE capability reporting and beam reporting for panel-related information may be supported.

Specifically, for panel-specific UL transmission, a UE capability value set index (hereinafter referred to as C-ID) is defined, and the UE may report UE capability information including information indicating how many C-IDs it has to the base station. Here, the attribute included/corresponding to the C-ID may be the maximum number of SRS ports supported by the terminal for each C-ID. That is, C-ID may be defined for panel(s) with different numbers of SRS ports.

Additionally or alternatively, the UE may report (instantly/periodically) by including the C-ID (reported as a terminal capability) in the beam report (i.e., panel-specific beam report).

For example, if beam reporting is configured/indicated for a terminal, the UE may report the RS indices related to the best N (e.g., N is a value configured by the base station between 1 and 4) (i.e., CRI or/and SSBRI) base station Tx beams (regardless of the UE Rx panel) to the base station along with the L1-RSRP or/and L1-SINR values, which are reception quality values of the corresponding RSs. When panel-specific beam reporting is set up for a UE, the UE may report the L1-RSRP/L1-SINR(s) related to the CRI/SSBRI(s) and the optimal C-ID (for each CRI/SSBRI) to the base station.

Here, a mode of reporting the C-ID individually for each CRI/SSBRI and/or a mode of reporting a single C-ID for all CRIs/SSBRIs may be supported.

Power control configuration/indication method when transmitting M-TRP UL

The pathloss reference RS (hereinafter PL-RS) may be associated with/included in the joint TCI state and/or the UL TCI state. Additionally, power control parameters other than PL-RS (e.g., P0, alpha, closed loop index) may be associated with the joint TCI state and/or the UL TCI state.

In other words, the base station may configure/indicate the UL transmission beam for the specific target DL/UL channel/RS of the UE through joint and/or separate UL TCI status and configure/indicate the UE together with power control parameters necessary for determining transmission power.

The above-described beam indication / configuration / update operation and power control configuration/indicated operation can be applied to the M-TRP environment as well as the S-TRP environment. For example, in an M-TRP environment, beam indication/configuration/update may be performed through indication of a plurality of DL TCI states and UL TCI states. As another example, power control parameters/operations may be supported for UL single DCI for M-TRP operation (or/and simultaneous UL transmission and reception based on multiple panels).

In explaining the present disclosure, the transmission panel/beam to be used when transmitting PUCCH/PUSCH may be interpreted/applied as the transmission beam to be used when transmitting the DMRS of PUCCH/PUSCH. Additionally, in describing the present disclosure, applying a transmission beam when transmitting PUCCH/PUSCH/PRACH/SRS, etc. may mean applying spatial Tx parameters/spatial domain Tx filter/spatial Tx filter for transmission of the corresponding PUCCH/PUSCH/PRACH/SRS.

As mentioned above, to support M-TRP transmission/reception operations, M (i.e., number of DL TCI states)/N (number of UL TCI states) > 1 may be supported. When the base station configures/indicates multiple M/N TCI states in a specific BWP, the M/N TCI state may be mapped/associated/connected in various ways for each target DL/UL channel.

In this case, when M TRPs perform M-TRP DL transmission for a specific UE, each of the M TCI states (for common beam use) may correspond to M source TRPs and may be used for UE M-TRP DL reception. Additionally, when a specific UE performs M-TRP UL transmission for N TRPs, each of the N TCI states may correspond to N target TRPs and may be used for UE M-TRP UL transmission.

Here, as described above, N TCI states may include/connect a set of power control parameters (e.g., PL-RS, P0, alpha, closed-loop index) for each transmit beam. That is, N TCI states for N target TRPs may be used when configuring/indicating the UE on transmission beam information and power control information for each TRP.

Assume that the UE performs M-TRP UL transmission to N different Tx panels for N target TRPs (i.e., when N TCI states (for common beam) correspond to N different Tx panels of the UE). Here, if each Tx panel of the UE is not equipped with a common PA (Power Amplifier), the PA performance for each panel may be different. Recognizing the above situation, the base station may configure/indicate N TCI states including/connected power control parameter sets to the UE.

If the base station schedules channels/RSs for multiple panels of the UE without knowing the maximum transmission power according to different PA performance for each panel of the UE, there is a problem that power exceeding the maximum power may be configured/indicated for each panel.

Hereinafter, in order to solve the above-mentioned problems, the power control configuration/indication method in (UE multi-panel) M-TRP UL transmission using the unified TCI (joint and/or DL/UL TCI state) and the subsequent UL Tx power determination operation of the UE are described.

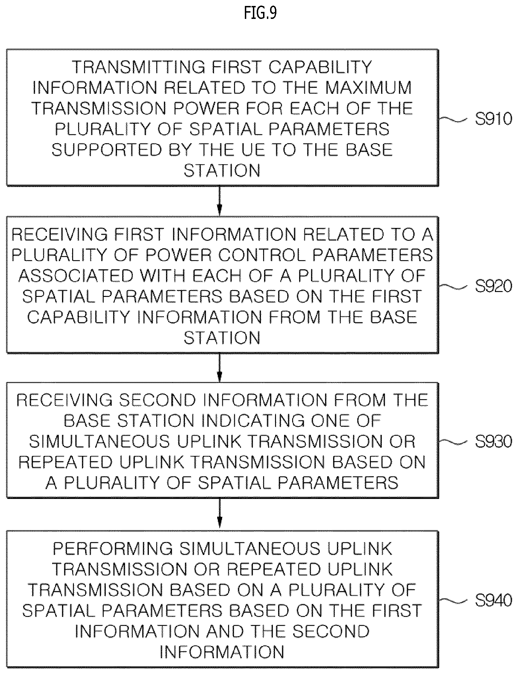

FIG. 9 is a diagram for describing an uplink transmission operation of a UE in a wireless communication system to which the present disclosure may be applied.

Here, as an example, the spatial parameter may include a plurality of spatial relation info configured for a physical uplink control channel (PUCCH) resource.

Additionally, spatial parameters may correspond to panels. That is, multiple spatial parameters may correspond to multiple panels.

As another example, the plurality of spatial parameters may include information related to a reference signal (RS) indicated by a plurality of transmission configuration indicator states (TCIs) (e.g., joint TCI state and/or separate TCI state).

As another example, the plurality of spatial parameters may include information related to reference signals indicated by a plurality of sounding reference signal (SRS) resource indicator fields included in downlink control information (DCI).

The UE may transmit first capability information related to the maximum transmission power for each of the plurality of spatial parameters supported by the UE to the base station (S910).

As an example, the UE may transmit first capability information to the base station based on the absolute value of the maximum transmission power for each of the plurality of panels (i.e., spatial parameters). As another example, the UE may transmit first capability information including the ratio between the maximum transmission power of each of a plurality of panels (i.e., spatial parameters) to the base station.

As another example, the UE may report to the base station a C-ID (capability value set index) including information related to the maximum number of SRS ports supported by the UE and/or the maximum transmission power.

The UE may receive first information related to a plurality of power control parameters associated with each of a plurality of spatial parameters based on the first capability information from the base station (S920).

The UE may receive configuration information related to power control parameters associated with each of a plurality of spatial parameters from the base station. Here, configuration information related to the power control parameters received from the base station may be based on the first capability information reported by the UE.

As an example, transmission power for each of multiple spatial parameters (or, transmission power based on a power control parameter associated with each of a plurality of spatial parameters) may be determined as the same value for each of the plurality of spatial parameters or may be determined based on the ratio between the maximum transmission powers reported for each of the plurality of spatial parameters.

As another example, the transmission power for each of the plurality of spatial parameters may be determined based on the ratio between the number of layers allocated to each of the plurality of spatial parameters. For example, if the transmission power for two spatial parameters is P, the number of layers assigned to the first spatial parameter is 1, and the number of layers assigned to the second spatial parameter is 2, the transmission power for the first spatial parameter may be 1/3P and the transmission power for the second spatial parameter may be 2/3P.

The UE may receive, from the base station, second information indicating one of simultaneous uplink transmission or repeated uplink transmission based on a plurality of spatial parameters (S930).

The UE may perform simultaneous uplink transmission or repeated uplink transmission based on a plurality of spatial parameters based on the first information and the second information (S940).

Here, before receiving the second information, the UE may transmit second capability information related to whether simultaneous uplink transmission based on multiple spatial parameters is supported to the base station.

The UE may receive second information from the base station indicating that it will indicate/switch one of simultaneous uplink transmission (i.e., STxMP transmission) or uplink repetitive transmission based on a plurality of spatial parameters. Here, the second information may be transmitted from the base station to the UE through RRC signaling, MAC-CE, or DCI.

Uplink repetitive transmission may include S-DCI-based M-TRP PUSCH/PUCCH repetitive transmission, M-DCI-based M-TRP PUSCH/PUCCH repetitive transmission, single PUCCH resource-based M-TRP PUCCH repetitive transmission. However, it is not limited to these. Uplink repetitive transmission may include repetitive transmission of at least one of PUSCH/PUCCH/PRACH/SRS.

If the second information indicates the uplink repetitive transmission, the UE may perform the uplink repetitive transmission using at least one of a plurality of spatial parameters. Another example, if the second information indicates a plurality of spatial parameters based simultaneously, the UE may perform simultaneous uplink transmission based on a plurality of spatial parameters. Here, the UE may perform the uplink simultaneous transmission based on the power control parameter associated with each spatial parameter.

For example, when simultaneous uplink transmission based on a plurality of spatial parameters is indicated by the second information, if a DCI scheduling a physical downlink shared channel (PDSCH) is received from the base station, the UE may simultaneously transmit PUCCH and SRS to the base station using multiple spatial parameters.

Specifically, the DCI for scheduling the PDSCH may include information for scheduling PUCCH and/or SRS for transmitting ACK/NACK for the PDSCH. When simultaneous uplink transmission based on a plurality of spatial parameters is indicated by the second information and a DCI for scheduling PDSCH is received, the UE may transmit PUCCH based on one of a plurality of spatial parameters and simultaneously transmit SRS based on the other one.

As another example, if simultaneous uplink transmission based on multiple spatial parameters is indicated by second information, when a DCI scheduling a physical uplink shared channel (PUSCH) is received, the UE may transmit PUSCH and SRS to the base station simultaneously using multiple spatial parameters.

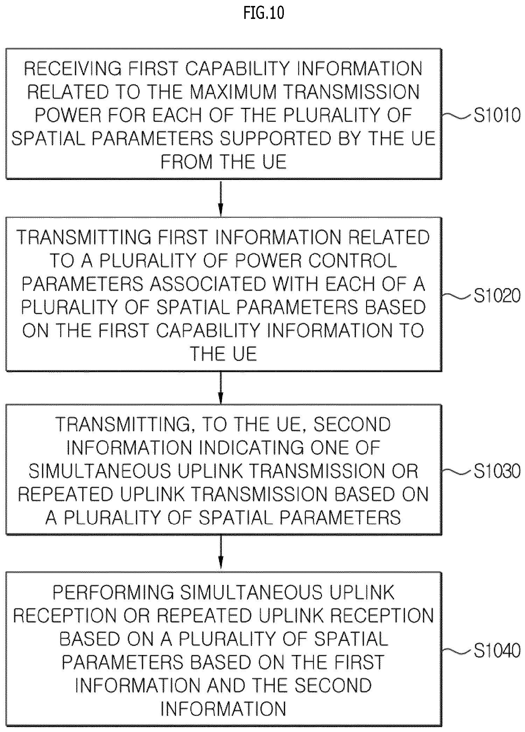

FIG. 10 is a diagram for describing an uplink reception operation of a base station in a wireless communication system to which the present disclosure may be applied.

The base station may receive first capability information related to the maximum transmission power for each of the plurality of spatial parameters supported by the terminal from the UE (S1010).

The base station may transmit first information related to a plurality of power control parameters associated with each of a plurality of spatial parameters to the terminal based on the first capability information (S1020).

For example, the base station may transmit power control parameters related to each spatial parameter to the terminal based on first capability information related to the maximum transmission power for each of the plurality of spatial parameters of the UE. First information related to a plurality of power control parameters may be transmitted to the UE through at least one of RRC signaling, MAC-CE, or DCI.

The base station may transmit second information indicating one of simultaneous uplink transmission or repeated uplink transmission based on a plurality of spatial parameters to the UE (S1030). The base station may perform simultaneous uplink reception or repeated uplink reception based on a plurality of spatial parameters based on the first information and the second information (S1040).

Hereinafter, a detailed description will be given of how the base station sets/instructs power control for the UE's M-TRP UL transmission and the subsequent UL Tx far determination operation of the UE.

Embodiment 1

A UE equipped with multiple Tx(/Rx) panels may report UE capability information including the maximum transmission power value for each panel to the base station. The maximum transmission power for each panel reported by the UE may be associated with the C-ID. That is, when reporting the maximum number of SRS ports for each C-ID, the UE may also report the maximum transmission power value supported for each C-ID.

Additionally, the UE may report capability information including information about the full power transmission mode supported for each panel and/or C-ID to the base station. For example, the UE may report capability information including the 'ul-FullPowerTransmission value' (e.g., 'fullPower', 'fullPowerMode1', or 'fulPowerMode2') supported by the UE for each panel/C-ID to the base station.

Embodiment 1-1

The UE may report capability information including the maximum transmission power supported by the UE for each panel based on absolute values to the base station. For example, assume that a specific UE is equipped with panel 1 and panel 2. To achieve power class (PC) 3 (maximum UE transmission power = 23 dBm), the maximum UE transmission power for each panel can be configured as shown below and Table 8.

[Table 8]

| Index | Maximum transmit power of panel 1 | Maximum transmit power of panel 2 |
|-------|-----------------------------------|-----------------------------------|
| 1     | 23 dBm                            | 23 dBm                            |
| 2     | 23 dBm                            | 20 dBm                            |
| 3     | 20 dBm                            | 23 dBm                            |
| 4     | 20 dBm                            | 20 dBm                            |

As described above, the UE may report to the base station the maximum transmission power of each transmission panel. Additionally or alternatively, as shown in the index of Table 8 described above, the modes for the two transmission panel configurations are defined/set, and the UE may report on which mode it supports. Additionally, the above-described embodiment may be extended and applied to a UE equipped with more than two transmission panels. That is, the UE may report the maximum transmission power for each transmission panel or/and the mode for transmission panel configuration to the base station.

Embodiment 1-2

The UE may report capability information containing information related to the relative ratio of the maximum transmission power for each panel to the base station. That is, the UE may report the maximum transmission power ratio for each panel according to the terminal implementation to the base station. For example, in the case of a terminal equipped with panel 1 and panel 2 as in Embodiment 1-1, the maximum transmission power ratio for each panel may be configured/defined as shown in Table 9.

[Table 9]

| Index | Maximum transmission power ratio by panel |
|-------|-------------------------------------------|
| 1     | 1:1                                       |
| 2     | 1:0.5                                     |
| 3     | 0.5:1                                     |
| 4     | [0.5:0.5]                                 |

As described above, the UE may report the ratio of the maximum transmission power of each (transmission) panel or/and the mode for that ratio to the base station. Additionally, the above-described examples may be extended and applied to terminals equipped with more than two transmission panels. That is, the UE may report the maximum power ratio (e.g., 1:0.5:0.5:0.25) or/and the mode for the maximum power ratio configuration of the transmission panel to the base station.

Embodiment 2

If a unified TCI state with M (i.e., number of DL TCI states)/N (number of UL TCI states)>1 is applied/configured (or/and there are at most 2 TRPs and 2 panels), the UE may perform STxMP (Simultanuous transmission across Multiple Panels) operation.

Here, the UE may perform capability reporting related to STxMP availability. That is, the UE may transmit capability information indicating whether STxMP is possible to the base station. The UL transmission operation of the UE may vary depending on the capability information report transmitted by the UE.

If a specific UE is capable of STxMP operation, the UE may perform STxMP transmission during S-DCI-based M-TRP UL transmission and DCI-based M-TRP UL transmission. For STxMP transmission based on M-DCI, the UE may perform simultaneous transmission between the same channels/RS(s) (e.g., PUSCH+PUSCH, PUCCH+PUCCH, SRS+SRS).

Here, in the case of S-DCI based M-TRP UL transmission and in case of simultaneous transmission combination between different channels/RS(s) in addition to simultaneous transmission combination between the same channel/RS(s), it has not been set/defined whether to support simultaneous transmission according to which channel/RS combination.

Hereinafter, a method for configuring/defining a specific channel/RS combination supporting simultaneous transmission is described. The example to be described later mainly considers simultaneous transmission within the same BWP for the UE's STxMP transmission, but the present disclosure does not exclude STxMP transmission for different BWP/CC.

Embodiment 2-1

In S-DCI-based M-TRP UL transmission, the combination of channels/RS(s) that the base station may configure/indicate/schedule for a (STxMP capable) UE may be limited to the combination of channels/RS(s) that can be scheduled with a specific single (DL/UL Grant) DCI.

For example, the basic purpose of the (non-fallback) DL grant DCI is PDSCH scheduling, but transmission of PUCCH and/or SRS for HARQ ACK/NACK transmission for the corresponding PDSCH can be scheduled with the same DCI. The base station may schedule simultaneous transmission of the UE's PUCCH and SRS (using different panels) using the DL grant DCI.

Here, since the TDRA (time domain resource allocation) information of PUCCH and SRS may not exactly match, time domain overlap between PUCCH and SRS may be supported both fully and partially.

Additionally or alternatively, the UE may report capability information in advance to the base station about whether it supports only fully overlap/only partially overlap/supports both fully and partially overlap.

As another example, since PUSCH scheduling is performed by a (non-fallback) UL grant DCI, scheduling for SRS can also be performed simultaneously, the base station may schedule simultaneous transmission of the UE's PUSCH and SRS (using different panels) using the UL grant DCI.

Here, since the TDRA information of PUSCH and SRS may not exactly match, time domain overlap between PUSCH and SRS may be fully/partially supported.

Additionally or alternatively, the UE may report capability information in advance to the base station about whether it supports only fully overlap/only partially overlap/supports both fully and partially overlap.

As another example, the base station may schedule STxMP transmission for different PUSCHs to the UE by utilizing a plurality of SRI fields or/and TPMI fields included in the (non-fallback) UL grant DCI (similar to M-TRP UL PUSCH repetitive transmission operation).

In this case, different (CB/NCB) SRS resource sets may be associated/associated with different terminal Tx panels, and power control parameters set(s) associated with codepoints indicated via different SRI fields (associated with SRS resource sets) may be used for power control operations for PUSCH transmitted from different UE Tx panels.

In addition, when two or more spatial relation information (i.e., spatialRelationInfo) or/and joint and/or separate UL TCI states are configured/activated for the PUCCH resource indicated by the PRI field included in the (non-fallback) DL grant DCI (similar to M-TRP UL PUCCH repetitive transmission operation), STxMP transmission based on a single PUCCH resource may be performed.

In this case, two or more spatial relation information configured/activated for the PUCCH resource or/and a set of power control parameters (transmission beam and) included/related to the joint and/or separate UL TCI state may be used for power control operations for PUCCH transmitted from different UE Tx panels.

In the case of transmission of multiple PUSCHs (using the SRI/TPMI field) and transmission by multiple transmission beams of a single PUCCH, the base station may configure/indicate the UE to signal whether to perform the M-TRP UL repetition operation or the STxMP operation through a higher layer signal such as RRC/MAC CE.

Additionally or alternatively, the base station may perform switching indications for M-TRP repetition operation and STxMP operation using a specific 1-bit field of the DL/UL grant DCI.

Embodiment 2-2

The base station may perform STxMP PUSCH scheduling using a single SRI field or/and TPMI field included in the (non-fallback) UL grant DCI.

In this case, the SRS resource(s) within a single (CB/NCB) SRS resource set may be related/associated with different UE Tx panels. For example, in the case of CB, i port within a specific n-port SRS resource may be associated with a specific panel, and n-i port may be associated with another panel.

For NCB, specific SRS resource(s) within the corresponding SRS resource set may be associated with a specific panel and the remaining SRS resource(s) may be associated with other panels.

In a basic wireless communication system, if the PUSCH is scheduled by a single SRI field or/and TPMI field, the UE may determine the PUSCH transmission power by using the PUSCH power control parameter linked to each codepoint in the SRI field and transmit the PUSCH by normalizing the power to the same ratio for each PUSCH port. Additionally, if the PUSCH is a multi-layer based PUSCH, the UE may normalize the PUSCH Tx power at the same rate for each PUSCH layer, and may divide the PUSCH transmission power at the same ratio for each PUSCH port within the precoder vector corresponding to each layer.

The present disclosure describes a method of dividing the PUSCH power indicated by the SRI field at the same rate for each layer or/and port, but for dividing the PUSCH power for each panel.

That is, in the following, when PUSCH ports are divided by panel in CB/NCB-based PUSCH transmission (using a single SRI field or/and TPMI field), the present describes the operation of i) dividing the PUSCH power 1:1 for each panel, ii) dividing it by the ratio of the number of layers allocated to each panel, or iii) dividing it by the ratio of the maximum power for each panel described above.

In case i), when the UE is equipped with two panels, the PUSCH power, P, may be divided by P/2 for each panel, and the PUSCH power may be divided evenly for each PUSCH port in the panel.

In a basic wireless communication system, if panel 1 has 2 ports and panel 2 has 4 ports, P/6 PUSCH power may be allocated to each PUSCH port. In case i), 2 ports of panel 1 may be transmitted with PUSCH power of P/4, and 4 ports of panel 2 may be transmitted with PUSCH power of P/8.

In case ii), when panel 1 transmits layer 2 and panel 2 transmits layer 1, PUSCH power equal to 2P/3 and P/3 may be allocated to panel 1 and panel 2, respectively.

In case iii), when the maximum power of panel 1 is 23 dBm and the maximum power of panel 2 is 20 dBm, PUSCH power of 2P/3 and P/3 may be allocated to panel 1 and panel 2, respectively.

In i), ii), and iii) above, the PUSCH power allocated to each panel can be divided by the number of ports in each panel and allocated to the PUSCH ports in each panel.

The above-described operation may be applied to S-TRP STxMP PUSCH, but may also be applied to M-TRP STxMP PUSCH. If CB-based PUSCH transmission is performed during the above-described operation, to indicate TPMI information across multiple panels, a partial coherent codebook may be utilized.

The above i), ii), and iii) may be applied to PUSCH transmission, but may also be applied to other UL channels/RS (e.g., PRACH, PUCCH, SRS).

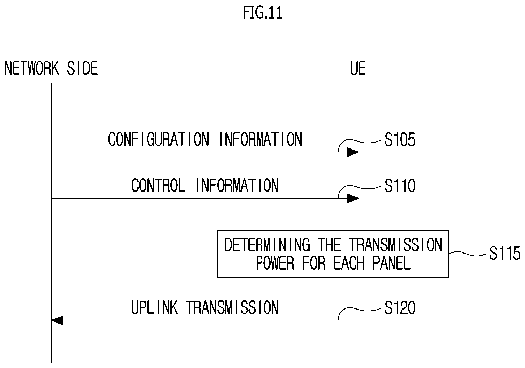

FIG. 11 is a diagram for describing the signaling procedure of the network side and the UE according to an embodiment of the present disclosure.

FIG. 11 shows an example of signaling between a network side and a terminal (UE) in an M-TRP situation to which the Embodiments (e.g., Embodiment 1, Embodiment 1-1, Embodiment 1-2, Embodiment 2, Embodiment 2-1, Embodiment 2-2 or a combination of one or more of the detailed Embodiments) of the present disclosure described above can be applied.

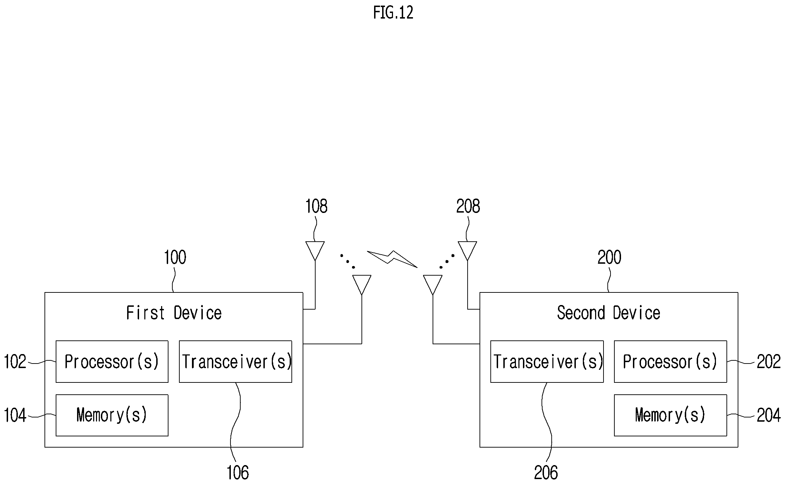

Here, the UE/network side is an example and may be replaced with various devices as described with reference to FIG. 12. FIG. 11 is for convenience of explanation and does not limit the scope of the present disclosure. Additionally, some step(s) shown in FIG. 11 may be omitted depending on the situation and/or settings. Additionally, in the operation of the network side/UE in FIG. 11, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU).

For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

Here, the panel may refer to a unit consisting of at least one antenna, antenna port, beam, and up/downlink RS/channel resources of the terminal. Additionally, panels can correspond to spatial parameters.

For example, if one UE is configured to transmit and receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network (S110).

For example, the configuration information may include information related to network-side configuration (i.e., TRP configuration), resource allocation information related to M-TRP-based transmission and reception, etc. The configuration information may be transmitted through a higher layer (e.g., RRC, MAC CE). The configuration information may include information related to uplink transmission based on a configured grant (CG). Additionally, if the configuration information is defined or configured in advance, the corresponding step may be omitted.

As another example, the configuration information may include panel-related configuration information for uplink transmission of the UE. As an example, panel-related configuration information may include information for uplink transmission (e.g., PUCCH, PUSCH, SRS, PRACH, etc.).

As another example, the configuration information may include transmission beam/power control information related to the above-described embodiment (e.g., Embodiment 1, Embodiment 1-1, Embodiment 1-2, Embodiment 2, Embodiment 2-1, Embodiment 2-2 or a combination of one or more of the detailed Embodiments).

Specifically, the configuration information may include a plurality of transmission panels or/and transmission beam/power control information corresponding to each panel. Multiple transmission panels or/and transmission beam information corresponding to each panel may include at least one of information related to the TCI state to be applied to each panel (e.g., unified TCI state or/and separate TCI state), information related to the beam to be applied to PUCCH/PUSCH/SRS, or information related to UL power control. Additionally, the configuration information may include at least one of CORESET-related TCI state/QCL information or PDSCH-related TCI state/QCL configuration information related to each panel.

In addition, multiple transmission panels or/and power control information corresponding to each panel may include power control parameters to be applied to a plurality of transmission panels and/or transmission and reception operations that can be performed in each panel.

Additionally or alternatively, the configuration information may include information for configuring an STxMP scheme (applied to PUSCH, PUCCH, SRS, etc.).

The configuration information may be configured for the UE through at least one of an RRC message, MAC-CE message, or DCI. The configuration information may be configured in the form of an existing information element (IE) and/or field (e.g., SRI field, etc.), or may be configured in the form of a newly defined IE and/or a newly defined field.

Before receiving configuration information from the network side, the UE may transmit UE capability information related to the above-described embodiment (e.g., Embodiment 1, Embodiment 1-1, Embodiment 1-2, Embodiment 2, Embodiment 2-1, Embodiment 2-2 or a combination of one or more of the detailed Embodiments) to the base station.

For example, an operation in which the UE (100 or 200 of FIG. 12) receives the configuration information from the network side(200 or 100 of FIG. 12) in step S105 may be implemented by the device of FIG. 12 to be described below. For example, referring to FIG. 12, one or more processors 102 may control one or more transceivers 106 and/or one or more memories 104 to receive the configuration information, and one or more transceivers 106 may receive the configuration information from a network side.

The UE may receive control information from the network (S110). Here, the control information may include a message/information for scheduling (M-TRP) UL transmission. The control information may include DCI and/or MAC CE.

The message/information may be scheduled on a channel/RS that can be transmitted simultaneously through multiple panels of the UE. Additionally or alternatively, the message/information may include transmission beam information or/and power control information.

For example, the operation of the UE (100 or 200 in FIG. 12) in step S110 described above receiving the control information from the network side (200 or 100 in FIG. 12) can be implemented by the device in FIG. 12, which will be described below. For example, referring to FIG. 12, one or more processors 102 may control one or more transceivers 106 and/or one or more memories 104 to receive the control information, and one or more transceivers 106 may receive the DCI from a network side.

The UE may determine the transmission power for each panel based on the control information (S115).

The UE may determine/control the transmission power for each panel according to the above-described embodiment (e.g., Embodiment 1, Embodiment 1-1, Embodiment 1-2, Embodiment 2, Embodiment 2-1, Embodiment 2-2 or a combination of one or more of the detailed Embodiments).

For example, when STxMP transmission is performed through different panels, if the total transmission power of each panel exceeds a preconfigured/defined threshold, the UE may perform transmission power scaling for each panel or drop the transmission itself based on priority rules.

The UE may perform scheduled uplink transmission based on the control information (S120).

As an example, the UE may simultaneously perform uplink transmission scheduled for each panel. As another example, the UE may perform scheduled uplink transmission on a specific panel. At this time, the UE may perform uplink transmission using the transmission power determined/allocated to each panel in step S115.

For example, the operation of the UE (100 or 200 in FIG. 12) in step S120 described above to transmit a PUSCH to the network side (200 or 100 in FIG. 12) can be implemented by the device in FIG. 12, which will be described below. For example, referring to FIG. 11, one or more processors 102 may control one or more transceivers 106 and/or one or more memories 104 to transmit the PUSCH, and one or more transceivers 106 may transmit the PUSCH to the network.

General Device to which the Present Disclosure may be applied

FIG. 12 is a diagram which illustrates a block diagram of a wireless communication system according to an embodiment of the present disclosure.

In reference to FIG. 12, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for of performing uplink transmission by a user equipment (UE) in a wireless communication system, the method comprising:

   transmitting, to a base station, first capability information related to maximum transmission power for each of a plurality of spatial parameters supported by the UE;
   receiving, from the base station, first information related to a plurality of power control parameters associated with each of the plurality of spatial parameters based on the first capability information;
   receiving, from the base station, second information indicating one of the plurality of spatial parameters-based simultaneous uplink transmission or uplink repeated transmission; and
   based on the first information and the second information, performing the plurality of spatial parameters-based simultaneous uplink transmission or the uplink repeated transmission.

2. The method of claim 1, wherein:
   the first capability information includes a ratio between the maximum transmission power of each of the plurality of spatial parameters.

3. The method of claim 1, wherein:
the plurality of spatial parameters include a plurality of spatial relation information configured for a physical uplink control channel (PUCCH) resource.

4. The method of claim 1, wherein:
the plurality of spatial parameters include information related to a reference signal (RS) indicated by a plurality of transmission configuration indicator (TCI) states.

5. The method of claim 1, wherein:
the plurality of spatial parameters include information related to reference signals indicated by a plurality of sounding reference signal (SRS) resource indicator fields included in downlink control information (DCI).

6. The method of claim 1, wherein:
transmission power for each of the plurality of spatial parameters is determined to be a same value for each of the plurality of spatial parameters or is determined based on a ratio between maximum transmission powers reported for each of the plurality of spatial parameters.

7. The method of claim 1, wherein:
the transmission power for each of the plurality of spatial parameters is determined based on a ratio between a number of layers allocated to each of the plurality of spatial parameters.

8. The method of claim 1, wherein:
based on the plurality of spatial parameters-based simultaneous uplink transmissions being indicated by the second information:
based on a DCI scheduling a physical downlink shared channel (PDSCH) being received, PUCCH and SRS are simultaneously transmitted to the base station using the plurality of spatial parameters.

9. The method of claim 1, wherein:
based on the plurality of spatial parameters-based simultaneous uplink transmissions being indicated by the second information:
based on a DCI scheduling a physical uplink shared channel (PUSCH) being received, the PUSCH and SRS are simultaneously transmitted to the base station using the plurality of spatial parameters.

10. The method of claim 1, wherein:
the second information is received from the base station through radio resource control (RRC) signaling, medium access control (MAC)-CE (control element), or DCI.

11. The method of claim 1, wherein:
second capability information related to whether simultaneous uplink transmission based on the plurality of spatial parameters is supported is transmitted to the base station.

12. A user equipment (UE) performing uplink transmission in a wireless communication system, the UE comprising:

at least one transceiver; and
at least one processor coupled to the at least one transceiver,
wherein the at least one processor is configured to:

transmit, to a base station through the at least one transceiver, first capability information related to maximum transmission power for each of a plurality of spatial parameters supported by the UE;
receive, from the base station through the at least one transceiver, first information related to a plurality of power control parameters associated with each of the plurality of spatial parameters based on the first capability information;
receive, from the base station through the at least one transceiver, second information indicating one of the plurality of spatial parameters-based simultaneous uplink transmission or uplink repeated transmission; and
based on the first information and the second information, perform the plurality of spatial parameters-based simultaneous uplink transmission or the uplink repeated transmission.

13. A method of performing uplink reception by a base station in a wireless communication system, the method comprising:

receiving, from a user equipment (UE), first capability information related to maximum transmission power for each of a plurality of spatial parameters supported by the UE;
transmitting, from the UE, first information related to a plurality of power control parameters associated with each of the plurality of spatial parameters based on the first capability information;
transmitting, to the UE, second information indicating one of the plurality of spatial parameters-based simultaneous uplink transmission or uplink repeated transmission; and
based on the first information and the second information, performing the plurality of spatial parameters-based simultaneous uplink reception or the uplink repeated reception.

14. A base station performing uplink reception in a wireless communication system, the base station comprising:

at least one transceiver; and
at least one processor coupled to the at least one transceiver,
wherein the at least one processor is configured to:

receive, from a user equipment (UE) through the at least one transceiver, first capability information related to maximum transmission power for each of a plurality of spatial parameters supported by the UE;
transmit, from the UE through the at least one transceiver, first information related to a plurality of power control parameters associated with each of the plurality of spatial parameters based on the first capability information;
transmit, to the UE through the at least one transceiver, second information indicating one of the plurality of spatial parameters-based simultaneous uplink transmission or uplink repeated transmission; and
based on the first information and the second information, perform the plurality of spatial parameters-based simultaneous uplink reception or the uplink repeated reception.

15. A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor,
wherein the operations comprise:

transmitting, to a base station, first capability information related to maximum transmission power for each of a plurality of spatial parameters supported by the UE;
receiving, from the base station, first information related to a plurality of power control parameters associated with each of the plurality of spatial parameters based on the first capability information;
receiving, from the base station, second information indicating one of the plurality of spatial parameters-based simultaneous uplink transmission or uplink repeated transmission; and
based on the first information and the second information, performing the plurality of spatial parameters-based simultaneous uplink transmission or the uplink repeated transmission.

16. At least one non-transitory computer readable medium storing at least one instruction, wherein:
the at least one instruction executed by at least one processor controls a device which performs uplink transmission or downlink reception in a wireless communication system to perform:

transmitting, to a base station, first capability information related to maximum transmission power for each of a plurality of spatial parameters supported by the UE;
receiving, from the base station, first information related to a plurality of power control parameters associated with each of the plurality of spatial parameters based on the first capability information;
receiving, from the base station, second information indicating one of the plurality of spatial parameters-based simultaneous uplink transmission or uplink repeated transmission; and
based on the first information and the second information, performing the plurality of spatial parameters-based simultaneous uplink transmission or the uplink repeated transmission.

FIG.1

NGC

AMF/UPF

AMF/UPF

NG-C/U

NG-C/U

NG-C/U

NG-C/U

Xn

gNB

gNB

NG-RAN

Xn

Xn

gNB

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

FIG.3

FIG.4

FIG.5

FIG.6

EP 4 472 297 A1

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601  S602  S603  S604  S605  S606  S607  S608

· DL/UL ACK/NACK
· UE CQI/PMI RI REPORT
  USING PUSCH AND PUCCH

FIG.7

UE                                              Base station

Uplink scheduling ——S1501

DCI for uplink scheduling (PDCCH) ——S1502

Uplink data (PUSCH) ——S1503

FIG.8

BASE STATION                                              UE

TX POWER RELATED PARAMETER/INFORMATION ——P05

TX POWER RELATED TPC COMMAND ——P10

DETERMINING THE TX POWER
FOR THE UPLINK TRANSMISSION ——P15

UPLINK TRANSMISSION BASED ON THE DETERMINED TX POWER ——P20

FIG.9

TRANSMITTING FIRST CAPABILITY
INFORMATION RELATED TO THE MAXIMUM
TRANSMISSION POWER FOR EACH OF THE
PLURALITY OF SPATIAL PARAMETERS
SUPPORTED BY THE UE TO THE BASE
STATION — S910

RECEIVING FIRST INFORMATION RELATED TO A
PLURALITY OF POWER CONTROL PARAMETERS
ASSOCIATED WITH EACH OF A PLURALITY OF
SPATIAL PARAMETERS BASED ON THE FIRST
CAPABILITY INFORMATION FROM THE BASE
STATION — S920

RECEIVING SECOND INFORMATION FROM THE
BASE STATION INDICATING ONE OF
SIMULTANEOUS UPLINK TRANSMISSION OR
REPEATED UPLINK TRANSMISSION BASED ON
A PLURALITY OF SPATIAL PARAMETERS — S930

PERFORMING SIMULTANEOUS UPLINK
TRANSMISSION OR REPEATED UPLINK
TRANSMISSION BASED ON A PLURALITY OF
SPATIAL PARAMETERS BASED ON THE FIRST
INFORMATION AND THE SECOND
INFORMATION — S940

FIG.10

RECEIVING FIRST CAPABILITY INFORMATION
RELATED TO THE MAXIMUM TRANSMISSION
POWER FOR EACH OF THE PLURALITY OF
SPATIAL PARAMETERS SUPPORTED BY THE UE
FROM THE UE ─── S1010

TRANSMITTING FIRST INFORMATION RELATED
TO A PLURALITY OF POWER CONTROL
PARAMETERS ASSOCIATED WITH EACH OF A
PLURALITY OF SPATIAL PARAMETERS BASED
ON THE FIRST CAPABILITY INFORMATION TO
THE UE ─── S1020

TRANSMITTING, TO THE UE, SECOND
INFORMATION INDICATING ONE OF
SIMULTANEOUS UPLINK TRANSMISSION OR
REPEATED UPLINK TRANSMISSION BASED ON
A PLURALITY OF SPATIAL PARAMETERS ─── S1030

PERFORMING SIMULTANEOUS UPLINK
RECEPTION OR REPEATED UPLINK RECEPTION
BASED ON A PLURALITY OF SPATIAL
PARAMETERS BASED ON THE FIRST
INFORMATION AND THE SECOND
INFORMATION ─── S1040

FIG.11

NETWORK SIDE                                    UE

CONFIGURATION INFORMATION ————————→ S105

CONTROL INFORMATION ————————→ S110

DETERMINING THE TRANSMISSION POWER FOR EACH PANEL ——— S115

←———————— UPLINK TRANSMISSION ——— S120

FIG.12

## INTERNATIONAL SEARCH REPORT

| | International application No. |
|---|---|
| | **PCT/KR2023/000950** |

**A. CLASSIFICATION OF SUBJECT MATTER**

**H04W 52/14**(2009.01)i; **H04W 52/36**(2009.01)i; **H04W 52/32**(2009.01)i; **H04W 52/42**(2009.01)i; **H04W 72/23**(2023.01)i; **H04B 7/0456**(2017.01)i; **H04B 7/0426**(2017.01)i; **H04B 7/0404**(2017.01)i

According to International Patent Classification (IPC) or to both national classification and IPC

**B. FIELDS SEARCHED**

Minimum documentation searched (classification system followed by classification symbols)

H04W 52/14(2009.01); H04B 17/391(2015.01); H04L 1/08(2006.01); H04L 5/00(2006.01); H04W 52/18(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 파라미터(spatial parameter), 성능(capability), 파워 제어 파라미터(power control parameter), 상향링크(uplink)

**C. DOCUMENTS CONSIDERED TO BE RELEVANT**

| Category* | Citation of document, with indication, where appropriate, of the relevant passages | Relevant to claim No. |
|---|---|---|
| A | CN 110536394 A (ZTE CORPORATION) 03 December 2019 (2019-12-03)<br>See claims 1-2. | 1-16 |
| A | WO 2021-040353 A1 (LG ELECTRONICS INC.) 04 March 2021 (2021-03-04)<br>See paragraphs [0434]-[0491]; claim 1; and figures 16-17. | 1-16 |
| A | KR 10-1816624 B1 (HUAWEI TECHNOLOGIES CO., LTD.) 09 January 2018 (2018-01-09)<br>See paragraphs [0024]-[0082]; and figure 1. | 1-16 |
| A | KR 10-2021-0006968 A (ZTE CORPORATION) 19 January 2021 (2021-01-19)<br>See paragraphs [0108]-[0116]; and figure 8. | 1-16 |
| A | US 2021-0266843 A1 (QUALCOMM INCORPORATED) 26 August 2021 (2021-08-26)<br>See paragraphs [0120]-[0150]; and figures 10-11. | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 April 2023** | **05 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/000950**

| Patent document cited in search report | | | Publication date (day/month/year) | Patent family member(s) | | | Publication date (day/month/year) |
|---|---|---|---|---|---|---|---|
| CN | 110536394 | A | 03 December 2019 | EP | 3952484 | A1 | 09 February 2022 |
| | | | | US | 2022-0201619 | A1 | 23 June 2022 |
| | | | | WO | 2020-199956 | A1 | 08 October 2020 |
| WO | 2021-040353 | A1 | 04 March 2021 | CN | 114303431 | A | 08 April 2022 |
| | | | | KR | 10-2022-0038375 | A | 28 March 2022 |
| | | | | US | 2022-0304018 | A1 | 22 September 2022 |
| KR | 10-1816624 | B1 | 09 January 2018 | CA | 2917658 | A1 | 05 February 2015 |
| | | | | CN | 105264974 | A | 20 January 2016 |
| | | | | CN | 105264974 | B | 23 August 2019 |
| | | | | EP | 3010290 | A1 | 20 April 2016 |
| | | | | EP | 3010290 | B1 | 07 March 2018 |
| | | | | JP | 2016-528817 | A | 15 September 2016 |
| | | | | RU | 2621728 | C1 | 07 June 2017 |
| | | | | US | 2016-0150488 | A1 | 26 May 2016 |
| | | | | WO | 2015-013939 | A1 | 05 February 2015 |
| KR | 10-2021-0006968 | A | 19 January 2021 | CN | 110474730 | A | 19 November 2019 |
| | | | | CN | 113541905 | A | 22 October 2021 |
| | | | | CN | 113541905 | B | 15 November 2022 |
| | | | | EP | 3793288 | A1 | 17 March 2021 |
| | | | | JP | 2021-522753 | A | 30 August 2021 |
| | | | | JP | 7106678 | B2 | 26 July 2022 |
| | | | | RU | 2762339 | C1 | 20 December 2021 |
| | | | | US | 11109323 | B2 | 31 August 2021 |
| | | | | US | 2021-0058873 | A1 | 25 February 2021 |
| | | | | US | 2021-0392588 | A1 | 16 December 2021 |
| | | | | WO | 2019-214649 | A1 | 14 November 2019 |
| US | 2021-0266843 | A1 | 26 August 2021 | BR | 112022015684 | A2 | 27 September 2022 |
| | | | | CN | 115053576 | A | 13 September 2022 |
| | | | | EP | 4108009 | A1 | 28 December 2022 |
| | | | | KR | 10-2022-0143656 | A | 25 October 2022 |
| | | | | US | 11317356 | B2 | 26 April 2022 |
| | | | | WO | 2021-168471 | A1 | 26 August 2021 |

Form PCT/ISA/210 (patent family annex) (July 2022)